**Europäisches Patentamt**

**European Patent Office**

**Office européen des brevets**

(19)

(11) Veröffentlichungsnummer: **0 241 745 B1**

(12) **EUROPÄISCHE PATENTSCHRIFT**

(45) Veröffentlichungstag der Patentschrift: **06.11.91**

(51) Int. Cl.⁵: **H04N 7/133**

(21) Anmeldenummer: **87104029.1**

(22) Anmeldetag: **19.03.87**

(54) **Verfahren zur Datenreduktion digitaler Bildsignale durch Vektorquantisierung von durch orthonormale Transformation mittels einer symmetrischen fastzyklischen Hadamard-Matrix gewonnenen Koeffizienten.**

(30) Priorität: **04.04.86 DE 3611309**

(43) Veröffentlichungstag der Anmeldung:
**21.10.87 Patentblatt 87/43**

(45) Bekanntmachung des Hinweises auf die
Patenterteilung:
**06.11.91 Patentblatt 91/45**

(84) Benannte Vertragsstaaten:
**DE FR GB NL**

(56) Entgegenhaltungen:

**PROCEEDINGS OF THE IEEE INTERNATIONAL CONFERENCE ON ACOUSTICS, SPEECH AND SIGNAL PROCESSING,** California, 19.-21. März 1984, Band 2, Seiten 29.9.1 - 29.9.4, **IEEE, New York, US; NASRABADI et al.: "A new image coding technique using transforms vector quantization"**

**FREQUENZ, Band 39, Nr. 7/8, August 1985, Seiten 226-234, Berlin, DE; B. HAMMER: "Transformationscodierung von Bildsequenzen mit der M-Hadamard-Transformation"**

**SIEMENS FORSCHUNGS- UND ENTWICK-LUNGSBERICHTE, Band 13, Nr. 3, 1984, Seiten 105-108, Würzburg, DE; B. HAMMER et al.: "Transform coding of digitized image signals"**

(73) Patentinhaber: **SIEMENS AKTIENGESELL-SCHAFT**
**Wittelsbacherplatz 2**
**W-8000 München 2(DE)**

(72) Erfinder: **Hammer, Bernard, Dr.**
**Geigelsteinstrasse 24**
**W-8098 Pfaffing(DE)**

## Beschreibung

Die vorliegende Erfindung stellt eine Weiterbildung eines Verfahrens zur Datenreduktion digitaler Bildsignale in einem Coder durch Vektorquantisierung von durch eine orthonormale Transformation mittels einer symmetrischen fastzyklischen Hadamard-Matrix gewonnenen Koeffizienten und zur Rekonstruktion in einem Decoder dar, wobei ein eintreffendes Bildsignal vor der Transformation in n Blöcke unterteilt wird, wobei die m Elemente eines zweidimensionalen Blocks in einer ersten Stufe nach einer Peano-Kurve in einem Eingangsvektor angeordnet werden und wobei durch die Transformation des Eingangsvektors ein Mittelwertkoeffizient und m-l Strukturkoeffizienten gebildet werden, die näherungsweise eine Reihenentwicklung des Wechselanteils des Eingangsvektors nach Pseudozufallsfunktionen sind.

In den letzten Jahren hat sich ein starkes Interesse für die Datenreduktion von Bildern, beispielsweise zur Verwendung für die Übertragung von Fernseh-Bewegtbildern innerhalb neuer digitaler Kommunikationsnetzwerke, beispielsweise dem ISDN (Integrated Services Digital Network) entwickelt. Anwendungsbereiche dafür liegen beispielsweise auf dem Gebiete der sog. Videokonferenzen oder der Bildtelefone bei Übertragungsraten von 2 Mbit/s bis herab zu 64 kbit/s.

Verfahren der eingangs genannten Art zur Datenreduktion digitaler Bildsignale durch Vektorquantisierung haben sich dabei als aussichtsreich zur Lösung der genannten Aufgaben herausgestellt. Die Vektorquantisierung erscheint anderen bekannten Quellen-Codierungsverfahren überlegen, da diese eine Datenreduktion nahe dem theoretischen Grenzwert unter der Voraussetzung gestattet, daß die Länge m der Vektoren ausreichend groß ausgelegt ist.

Die Vektorquantisierung betrachtet einen Block aufeinanderfolgender Informationsteile, z. B. die Abtastwerte eines Bildes, als einen Vektor, der geschlossen quantisiert wird. Im Gegensatz zu einer skalaren Quantisierung nimmt die Vektorquantisierung damit Rücksicht auf die statistischen Abhängigkeiten der Informationsteile voneinander.

Ein Vektorquantisierer sucht einen k-dimensionalen Vektor aus einem endlichen Satz von Ausgangsvektoren, dem sog. Codebuch, aus, der die größte Ähnlichkeit mit dem Eingangsvektor aufweist. Der Codebuchindex dieses Vektors wird mit einem binären Codewort der Länge $L = \log_2 N$ codiert, wobei N die Anzahl der Ausgangsvektoren oder die Größe des Codebuches bezeichnet. Anders als bei der skalaren Quantisierung kann somit die Anzahl $R = L/k$ der Bits, die benötigt werden, um eine Vektorkomponente zu codieren, ein Bruchteil von 1 sein.

Das Haupthindernis bei Verwendung der Vektorquantisierung ist deren Komplexität, die exponentiell mit R und k ansteigt, d. h. daß ein Vektorquantisierer der mit Vektoren der Länge k und einer Rate von R bit/Komponente arbeitet, $k2^{Rk}$ Operationen für die Codebuchsuche und einen Codebuch-Speicherplatz der gleichen Größenordnung benötigt. Daher ist die Blockgröße k in den meisten Anwendungsfällen für die Vektorquantisierung auf 16 begrenzt. Die Vektorquantisierung von Bildern mit solch kleinen Blockgrößen hat zur Folge, daß stark sichtbare Rekonstruktionsfehler an den Blockgrenzen auftreten. Die Fehler bestehen hauptsächlich aus zwei Arten, nämlich

- Treppenstufenartige Rekonstruktion von Bildkanten, was durch unabhängiges Verarbeiten der Bildblöcke bewirkt wird, und
- Sprünge des Graupegels von Block zu Block, während sich die Graupegel des Originalbildes nur graduell verändern (block contouring).

Um dieses Problem zu überwinden, wird eine Vektorquantisierung mit einer sog. M-Hadamard-Transformation (MHT) verwendet. Diese Art der Transformation ist gut geeignet, die sog. Kontur-Effekte zu verhindern.

Weitere Vorteile der Vektorquantisierung von M-Hadamard Koeffizienten von digitalen Bildsignalen ist die Aufspaltung des Signals eines Blocks von k Bildabtastwerten in einen Mittelwertkoeffizient, der dem Gleichanteil des Bildblocks proportional ist, und in k-1 Strukturkoeffizienten, die den Wechselanteil oder die Struktur des Blocks repräsentieren. Zur Datenreduktion des Bildblocks werden seine k-1 Strukturkoeffizienten vektorquantisiert und sein Mittelwertkoeffizient skalar quantisiert. Zur Erhöhung der Datenreduktion kann dieses Schema kaskadiert werden, indem die Mittelwertkoeffizienten von k benachbarten Blöcken wiederum in einen Vektor zusammengefaßt werden und in gleicher Weise wie zuvor beschrieben verarbeitet werden.

Eine weitere Eigenschaft von M-Hadamard-Koeffizienten ist, daß die Spannweite w ihrer Strukturkoeffizienten $y_i$

$$w = \max_i y_i - \min_i y_i \quad ; \quad i = 2, k$$

EP 0 241 745 B1

im statistischen Mittel linear abhängig von der Standardabweichung der Strukturkoeffizienten

$$\sigma = \left( \frac{1}{K-2} \sum_{i=2}^{K} (y_i - \bar{y})^2 \right)^{\frac{1}{2}} \text{ mit } \bar{y} = \frac{1}{K-1} \sum_{i=2}^{K} y_i$$

ist. Hieraus ergibt sich für die Vektorquantisierung ein wesentlicher Aspekt, nämlich daß zur Suche eines Repräsentativvektors im Codebuch als Suchkriterium anstelle des üblicherweise verwendeten kleinsten mittleren quadratischen Fehlers der Vektorelemente als äquivalentes Maß die kleinste Spannweite der Differenzen der Vektorelemente verwendet werden kann. Da zur Berechnung der Spannweite keine Multiplikationen erforderlich sind, kann der Rechen- und Schaltungsaufwand klein gehalten werden.

Aus Siemens Forschungs- und Entwicklungsberichte, Bd. 13 (1984) Nr. 3, Seiten 105 bis 108, und "Frequenz" 39 (1985) 7/8, Seiten 226 bis 234, gehen jeweils die Prinzipien der M-Hadamard-Transformation hervor. Die Dissertationsschrift "Transformationscodierung von digitalisierten Grautonbildern mit M-Sequenzen" von Bernard Hammer (RWTH 1981 Aachen) befaßt sich eingehend mit der Problematik der Transformationscodierung.

Die bekannten Vektorquantisierverfahren zur Datenreduktion von Bildsignalen haben den Nachteil, daß zur Quantisierung eines Blocks von k Bildabtastwerten Vektoren mit k Elementen verarbeitet werden müssen. Zur Suche eines Repräsentativvektors im Codebuch wird in der Regel der mittlere quadratische Fehler oder alternativ, jedoch mit deutlich schlechteren Ergebnis, der mittlere Fehlerbetrag der Vektorelemente des Eingangsvektors und des Repräsentativvektors verwendet.

Damit ist zur Realisierung eines Vektorquantisierverfahrens ein höherer Aufwand zur Speicherung des Codebuchs sowie ein höherer Rechen- und Schaltungsaufwand zur Durchführung der Codebuchsuche notwendig.

Der vorliegenden Erfindung liegt die Aufgabe zugrunde, bekannte Verfahren dahingehend weiterzubilden, daß ein höherer Grad der Datenreduktion digitaler Bildsignale erreicht wird.

Die der vorliegenden Erfindung zugrunde liegende Aufgabe wird durch ein Verfahren der eingangs genannten Art und gemäß dem Oberbegriff des Patentanspruchs 1 gelöst, das durch die in dem kennzeichnenden Teil des Patentanspruchs 1 angegebenen Merkmale charakterisiert ist.

Vorteilhafte Weiterbildungen der Erfindung sind durch die in den abhängigen Ansprüchen angegebenen Merkmale gekennzeichnet.

Im folgenden wird die vorliegende Erfindung anhand mehrerer, Ausführungsbeispiele für die Erfindung betreffender Figuren im einzelnen erläutert.

Fig. 1    zeigt ein Blockschaltbild für einen Coder zur Durchführung des erfindungsgemäßen Verfahrens.

Fig. 2    zeigt ein Blockschaltbild eines Decoders zur Durchführung des erfindungsgemäßen Verfahrens.

Fig. 3    zeigt ein Blockschaltbild eines sog. INTRA/INTER-FRAME-Vektorquantisierers zur Durchführung des erfindungsgemäßen Verfahrens.

Fig. 4    zeigt ein Blockschaltbild einer Rekonstruktionseinheit zur Durchführung des erfindungsgemäßen Verfahrens.

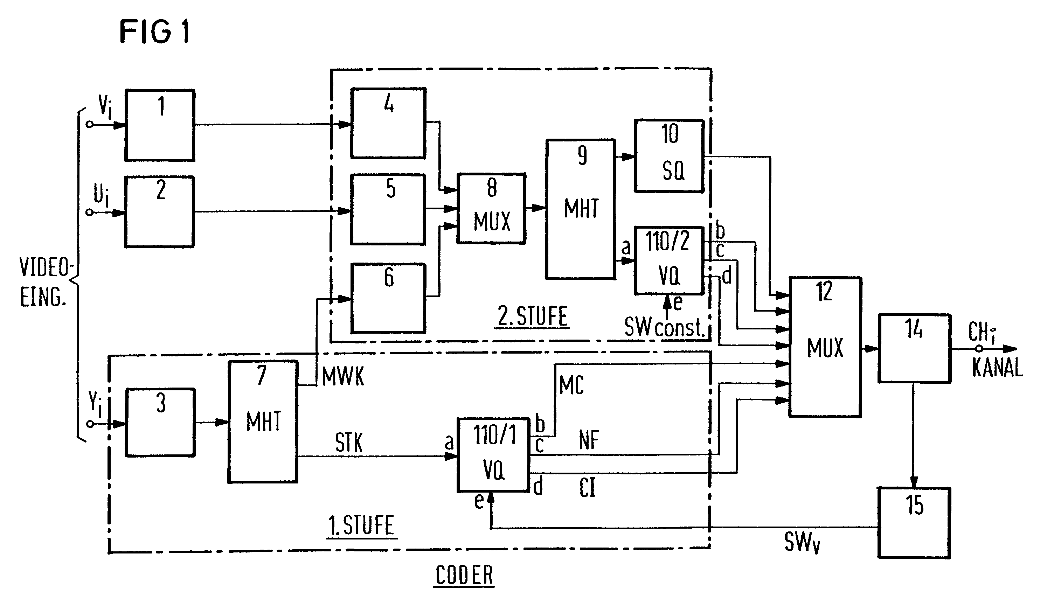

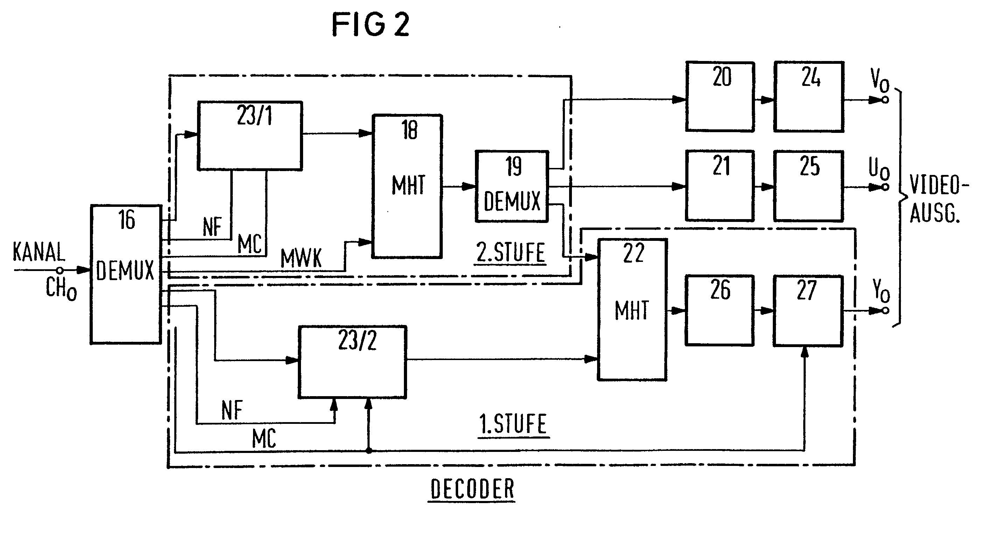

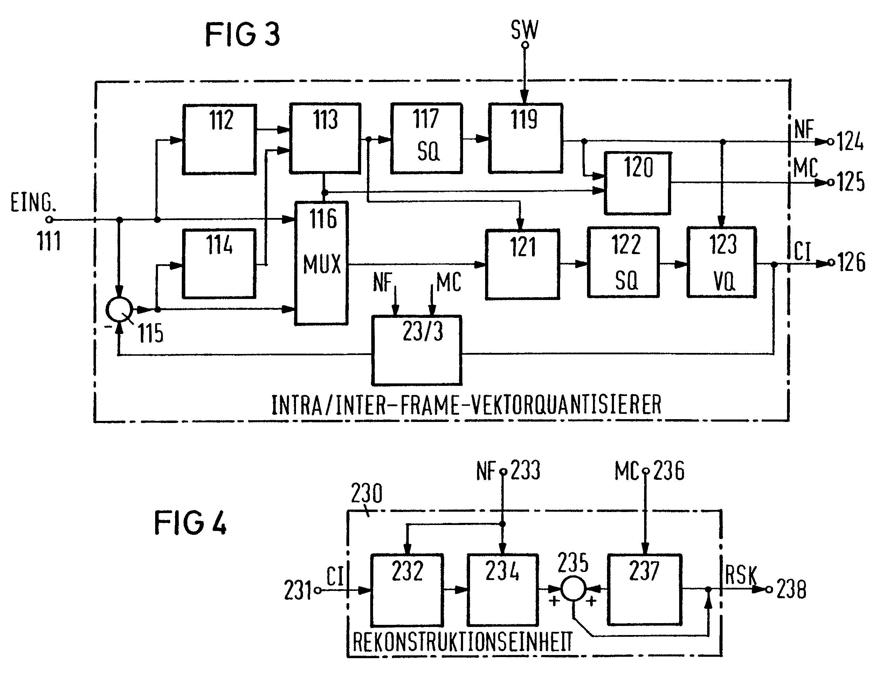

Wie bereits erläutert zeigen die Figuren 1 und 2 jeweils einen Coder bzw. einen Decoder, welche Einrichtungen jeweils am Anfang bzw. am Ende eines Übertragungskanals für die digitalen Bildsignale, die durch erfindungsgemäße Verfahren datenreduziert werden sollen, angeordnet sind. Fig. 3 zeigt, wie bereits erläutert, das Blockschaltbild eines INTRA/INTER-FRAME-Vektorquantisierers, der zweifach innerhalb des Coders gemäß Fig. 1 angeordnet ist. Fig. 4 zeigt, wie bereits erläutert, eine Rekonstruktionseinheit, die zweifach in dem Decoder gemäß Fig. 2 und einmal in dem INTER/INTRA-FRAME Vektorquantisierer gemäß Fig. 4 angeordnet ist.

Dem Coder (Fig. 1) wird über Eingangsklemmen $V_i$, $U_i$ und $Y_i$ ein digitales Bildsignal, das vor seiner Übertragung über einen digitalen Übertragungskanal mit verhältnismäßig geringer Datenrate datenreduziert werden soll, zugeführt. Dabei wird der Eingangsklemme $Y_i$ die Luminanzkomponente des Bildsignals zugeführt, und den Eingangsklemmen $V_i$ und $U_i$ werden die Chrominanzkomponenten dieses Signals zugeführt. An die Eingangsklemme $V_i$ ist ein digitaler Tiefpaß mit Unterabtastungsfunktion 1 angeschlossen, und an die Eingangsklemme $U_i$ ist ein digitaler Tiefpaß mit Unterabtastungsfunktion 2 angeschlossen. Der Tiefpaß mit Unterabtastungsfunktion 1 ist mit einem Abtastwert-Umordner 4 verbunden, dessen Ausgang einem ersten Eingang eines Multiplexers 8 zugeführt wird. Der Tiefpaß mit Unterabtastungsfunktion 2 ist mit

3

EP 0 241 745 B1

seinem Ausgang an einen Eingang eines Abtastwert-Umordners 5 angeschlossen, dessen Ausgang mit einem zweiten Eingang des Multiplexers 8 verbunden ist. Die Eingangsklemme $Y_i$ für die Luminanzkomponente ist mit dem Eingang eines weiteren Abtastwert-Umordners 3 verbunden, dessen Ausgang an eine MHT-Transformationseinheit 7 angeschlossen ist, von der ein Ausgang, der einen Mittelwertkoeffizienten MWK ausgibt, mit dem Eingang eines weiteren Abtastwert-Umordners 6 verbunden, dessen Ausgang mit einem dritten Eingang des Multiplexers 8 verbunden ist. Der Ausgang des Multiplexers 8 ist mit dem Eingang einer weiteren MHT-Transformationseinheit 9 verbunden, von der ein Ausgang mit dem Eingang eines Skalarquantisierers 10 verbunden ist, dessen Ausgang mit einem ersten Eingang eines Multiplexers 12 verbunden ist. Ein zweiter Ausgang der MHT-Transformationseinheit 9 ist mit einem INTRA/INTER-FRAME-Vektorquantisierer 110/2 über dessen Eingangsklemme a verbunden, dessen erste Ausgangsklemme b mit einem zweiten Eingang des Multiplexers 12 verbunden ist. Ein zweiter Ausgang c des Vektorquantisierers 110/2 ist mit einem dritten Eingang des Multiplexers 12 verbunden, und ein dritter Ausgang d des Vektorquantisierers 110/2 ist an einen vierten Eingang des Multiplexers 12 angeschlossen. Über einen Seiteneingang e wird dem Vektorquantisierer 110/2 ein Signal für einen konstanten Schwellwert zugeführt. Ein zweiter Ausgang der MHT-Transformationseinheit 7 ist mit einem Eingang a eines zweiten Vektorquantisierers 110/1, dem aus der Transformationseinheit 7 Strukturkoeffizienten STK zugeführt werden, verbunden. Ein erster Ausgang b des zweiten Vektorquantisierers 110/1 liefert einen Modus-Code MC an einen fünften Eingang des Multiplexers 12. Ein zweiter Ausgang c des Vektorquantisierers 110/1 ist mit einem sechsten Eingang des Multiplexers 12 verbunden und liefert diesem ein Signal für einen Normierungsfaktor NF. Ein dritter Ausgang d des zweiten Vektorquantisierers 110/1 ist mit einem siebten Eingang des Multiplexers 12 verbunden und liefert diesem ein Signal für einen Codebuchindex CI. Einem Seiteneingang e des Vektorquantisierers 110/1 wird ein veränderbares Signal für einen Schwellwert aus einer Pufferspeichersteuerung 15 zugeführt, die mit Signalen aus einem Pufferspeicher 14 versorgt wird, welcher mit seinem Eingang an den Ausgang des Multiplexers 12 und mit seinem Ausgang an den Eingang $CH_i$ des Übertragungskanals angeschlossen ist.

Der Übertragungskanal ist an dem Ende, an dem der Decoder (Fig. 2) angeordnet ist, mit einer Eingangsklemme $CH_o$ verbunden. Diese Eingangsklemme $CH_o$ steht mit dem Eingang eines Demultiplexers 16 in Verbindung. Ein erster Ausgang des Demultiplexers ist mit einem Eingang einer Rekonstruktionseinheit 23/1 verbunden. Ein zweiter Ausgang des Demultiplexers 16 ist mit einem ersten Seiteneingang der Rekonstruktionseinheit 23/1 verbunden, und ein dritter Ausgang des Demuliplexers 16 ist mit einem zweiten Seiteneingang der Rekonstruktionseinheit 23/1 verbunden. Ein Ausgang der Rekonstruktionseinheit 23/1 ist mit einem ersten Eingang einer MHT-Transformationseinheit 18 verbunden, und ein vierter Ausgang des Demultiplexers 16 ist mit einem zweiten Eingang dieser MHT-Transformationseinheit 18 verbunden. Ein Ausgang dieser Transformationseinheit 18 ist mit einem Eingang eines weiteren Demultiplexers 19 verbunden. Ein erster Ausgang dieses Demultiplexers 19 ist an einen Eingang eines Abtastwert-Umordners 20 angeschlossen. Der Ausgang dieses Abtastwert-Umordners 20 steht mit einem Eingang einer Interpolationseinheit 24 in Verbindung. Der Ausgang dieser Interpolationseinheit 24 ist mit einer Klemme $V_o$ für eine der Chrominanzkomponenten des rekonstruierten digitalen Bildsignals verbunden. Ein zweiter Ausgang des zweiten Demultiplexers 19 ist an einen Eingang eines zweiten Abtastwert-Umordners 21 angeschlossen, dessen Ausgang mit einer zweiten Interpolationseinheit 25 verbunden ist. Der Ausgang dieser zweiten Interpolationseinheit 25 ist mit einer Klemme $U_o$ für die zweite Chrominanzkomponente des rekonstruierten digitalen Bildsignals verbunden. Ein dritter Ausgang des zweiten Demultiplexers 19 ist an einen ersten Eingang einer zweiten MHT-Transformationseinheit 22 angeschlossen. Ein fünfter Ausgang des ersten Demultiplexers 16 ist mit einem Eingang einer zweiten Rekonstruktionseinheit 23/2 verbunden, deren Ausgang mit einem zweiten Eingang der zweiten MHT-Transformationseinheit verbunden ist. Ein sechster bzw. ein siebter Ausgang des ersten Demultiplexers 16 ist jeweils mit einem ersten bzw. einem zweiten Seiteneingang der zweiten Rekonstruktionseinheit 23/2 verbunden, wobei der zweite Seiteneingang dieser zweiten Rekonstruktionseinheit 23/2 außerdem mit einem Seiteneingang einer Interpolationseinheit 27 für eine sog. bedingte Interpolation verbunden ist. Der Ausgang der zweiten MHT-Transformationseinheit 22 ist mit einem Eingang eines dritten Abtastwert-Umordners 26 verbunden, dessen Ausgang mit einer Eingang der dritten Interpolationsstufe 27 für die sog. bedingte Interpolation verbunden ist. Schließlich ist der Ausgang der dritten Interpolationsstufe 27 mit einer Klemme $Y_o$ für die Luminanzkomponente des rekonstruierten digitalen Bildsignals verbunden.

Wie bereits zuvor erläutert, zeigt Fig. 3 ein Blockschaltbild für einen in der Gesamtanordnung mehrmals vorgesehenen Intra/Inter-Frame-Vektorquantisierer 110. Eine Eingangsklemme 111 dieses Vektorquantisierers ist mit einem Eingang einer Normierungsfaktor-Berechnungseinheit 112, einem ersten Eingang eines Multiplexers 116 und einem ersten Eingang eines Subtrahiergliedes 115 verbunden. Der Ausgang dieses Subtrahiergliedes 115 ist zum einen mit einem zweiten Eingang des Multiplexers 116 und zum anderen mit

4

einem Eingang einer Normierungsfaktor-Berechnungseinheit 114 verbunden. Der Ausgang der zuerst genannten Normierungs-Berechnungseinheit 112 sowie der Ausgang der zuletzt genannten Normierungsfaktor-Berechnungseinheit 114 sind jeweils an einem Eingang einer Analyseeinheit 113 geführt. Ein Seitenausgang dieser Analyseeinheit 113 ist zum einen mit einem Seiteneingang des Multiplexers 116 und zum anderen mit einem von zwei Eingängen eines Modus-Coder 120 verbunden. Ein Ausgang der Analyseeinheit 113 ist zum einen mit dem Eingang eines Skalaquantisierers 117 und zum anderen mit einem Seiteneingang eines Dividiergliedes 121 verbunden. Der Ausgang des Skalaquantisierers 117 ist mit einem Eingang eines Schwellwertentscheiders 119 verbunden, von dem ein Seiteneingang 118 mit einem Signal für einen Schwellwert versorgt wird. Der Ausgang des Schwellwertentscheiders 119 ist zum einen mit dem anderen der beiden Eingänge des Modus-Coder 120 sowie mit einem Seiteneingang des Vektorquantisierers 123 verbunden und zum anderen mit einer Ausgangsklemme 124 für einen Normierungsfaktor verbunden. Der Ausgang des Modus-Coder 120 ist mit einer weiteren Ausgangsklemme 125 für einen Modus-Coder verbunden. Der Ausgang des Multiplexers 116 ist mit dem Eingang des Dividiergliedes 121 verbunden, dessen Ausgang mit einem Eingang eines weiteren Skalaquantisierers 122 verbunden ist. Der Ausgang dieses Skalaquantisierers 122 ist mit einem Eingang eines Vektorquantisierers 123 verbunden, dessen Ausgang zum einen zu einer dritten Ausgangsklemme 126 für einen Codebuch-Index und zum anderen zu einem Eingang einer Rekonstruktionseinheit 23/3 führt. Der Ausgang dieser Rekonstruktionseinheit 23/3 ist mit dem zweiten Eingang des Differenzgliedes 115 verbunden. Über zwei Seiteneingänge wird der Rekonstruktionseinheit 23/3 ein Signal für einen Normierungsfaktor bzw. einen Modus-Code zugeführt.

Fig. 4 zeigt schließlich, wie bereits ebenfalls zuvor erläutert, das Blockschaltbild der Rekonstruktionseinheit, wie sie mehrfach in der zuvor beschriebenen Anordnung verwendet wird. Eine Eingangsklemme 231, über die ein Codebuch-Index zugeführt wird, ist mit einem Eingang und eine Eingangsklemme 233, über die ein Normierungsfaktor zugeführt wird, ist mit einem Seiteneingang einer Speichereinheit, dem sog. Code-Buch 232 verbunden. Der Ausgang dieses Code-Buchs ist mit einem Eingang eines Multiplikators 234 verbunden, dem über einen Seiteneingang 233 ein Normierungsfaktor zugeführt wird. Der Ausgang dieses Multiplikators 234 ist mit einem Eingang eines Addiergliedes 235 verbunden, dessen Ausgang zum einen mit einem Eingang eines Referenzspeichers 237 und zum anderen mit einer Ausgangsklemme für einen rekonstruierten Strukturkoeffizienten 238 verbunden ist. Über eine Seiteneingangsklemme 236 wird dem Referenzspeicher 237 durch einen Seiteneingang ein Modus-Codewort zugeführt. Der Ausgang des Referenzspeichers ist mit dem zweiten Eingang des Addiergliedes 235 verbunden.

Im folgenden wird das erfindungsgemäße Verfahren, zu dessen Durchführung die zuvor beschriebenen Schaltungsanordnungen, die lediglich Ausführungsbeispiele darstellen, beschrieben.

In dem erfindungsgemäßen Verfahren zur Datenreduktion digitaler Bildsignale in einem Coder durch Vektorquantisierung von durch eine orthonormale Transformation mittels einer symmetrischen fastzyklischen Hadamard-Matrix gewonnenen Koeffizienten und zur Rekonstruktion in einem Decoder wird ein eintreffendes Bildsignal vor der Transformation in n Blöcke unterteilt, wobei die k Elemente eines zweidimensionalen Blocks in einer ersten Stufe nach einer Peano-Kurve in einem Eingangsvektor angeordnet werden, und wobei durch die Transformation des Eingangsvektors ein Mittelwertkoeffizient und k-1 Strukturkoeffizienten gebildet werden, die näherungsweise eine Reihenentwicklung des Wechselanteils des Eingangsvektors nach Pseudo-Zufallsfunktionen darstellen. In dieser Beschreibung werden bekannte technische Grundlagen und übliche Bezeichnungsweisen verwendet, die der Disseration "Transformationscodierung von digitalen Grautonbildern mit M-Sequenzen" von B.Hammer, RWTH Aachen 1981, entnommen werden können.

Erfindungsgemäß werden die Mittelwertkoeffizienten von K benachbarten Blöcke in einer zweiten Stufe 4, 5, 6, 8, 9, 10, 110/2 wiederum in n/k Blöcke unterteilt, wobei die K Blockelemente eines zweidimensionalen Blocks wiederum nach einer Peano-Kurve in einem Eingangsvektor angeordnet werden und wobei durch Transformation 9 des Eingangsvektors wiederum ein Mittelwertkoeffizient und k-1 Strukturkoeffizienten gebildet werden. Der Mittelwertkoeffizient der zweiten Stufe 4, 5, 6, 8, 9, 10, 110/2 wird skalar quantisiert 10 und zu dem Decoder übertragen. Die Strukturkoeffizienten oder die Differenz zwischen diesen Strukturkoeffizienten und den korrespondierenden rekonstruierten Strukturkoeffizienten des vorzugsweise zeitlich unmittelbar vorhergehenden Bildes der ersten und der zweiten Stufe 3, 7, 110/1; 4, 5, 6, 8, 9, 110/2 werden jeweils durch eine Vektorquantisierung 110/1; 110/2 datenreduziert, wobei die Differenz vektorquantisiert wird, wenn die Spannweite der Strukturkoeffizientdifferenz kleiner als die Spannweite der Strukturkoeffizienten selbst ist. Diese Spannweite, die als Normierungsfaktor NF bezeichnet wird, wird skalar quantisiert und mit einem Schwellwert SW verglichen. Der Normierungsfaktor NF wird auf Null gesetzt, wenn der den Schwellwert SW unterschreitet. Der quantisierte Normierungsfaktor wird zu dem Decoder (Fig. 2) übertragen, wenn er oberhalb des Schwellwerts SW liegt. Ein Modus-Codewort MC, aus dem die Schwellwertentscheidung hervorgeht, ob die Strukturkoeffizienten oder die Strukturkoeffizientdifferenzen vektorquantisiert wurden, wird zu dem Decoder (Fig. 2) übertragen. Die Strukturkoeffizienten oder die Strukturkoeffizientdiffe-

5

renzen mit einem Normierungsfaktor oberhalb des Schwellwerts SW werden durch Division 121 durch ihren Normierungsfaktor vor der Vektorquantisierung normiert. Die normierten Strukturkoeffizienten oder Strukturkoeffizientdifferenzen werden vor der Vektorquantisierung 123 gleichförmig skalar quantisiert 122. Die normierten und skalar quantisierten Strukturkoeffizienten oder Strukturkoeffizientdifferenzen bilden den Eingangsvektor für die Vektorquantisierung. In dem Vorgang für die Vektorquantisierung wird der Index desjenigen Vektors aus einem Codebuch 232 ermittelt, für den die Spannweite der Differenzen zwischen seinen Vektorelementen und denjenigen des Eingangsvektors ein Minimum aufweist. Die Indexsuche erfolgt nur in einem Teilbereich des Codebuchs 232, welcher durch den quantisierten Normierungsfaktor bestimmt ist. Der Codebuchindex CI wird zu dem Decoder (Fig. 2) übertragen. Die Rekonstruktionseinheit rekonstruiert die Strukturkoeffizienten und speichert sie ab, indem aus dem Codebuch 232 die dem Codebuchindex CI und denn quantisierten Normierungsfaktor NF zugeordneten quantisierten normierten Strukturkoeffizienten oder Strukturkoeffizientdifferenzen ausgelesen werden, diese mit dem quantisierten Normierungsfaktor multipliziert werden und in Abhängigkeit von dem Modus-Codewort MC zu den Strukturkoeffizientdifferenzen die in dem Referenzspeicher 237 abgelegten, rekonstruierten Strukturkoeffizienten dessen vorzugsweise zeitlich unmittelbar vorhergehenden Bildes addiert werden oder zu den Strukturkoeffizienten Null addiert wird und das Resultat in dem Referenzspeicher 237 abgelegt wird. Der Decoder (Fig. 2) rekonstruiert mit der gleichen Rekonstruktionseinheit 23/1 wie in dem Coder (Fig. 1) aus dem Codebuchindex CI, dem quantisierten Normierungsfaktor und dem Modus-Codewort die Strukturkoeffizienten der zweiten Stufe 4, 5, 6, 8, 9, 10, 110/2 des Coders (Fig. 1). Aus diesen Strukturkoeffizienten und dem Mittelwertkoeffizient werden durch Transformation die Mittelwertkoeffizienten der ersten Stufe 3, 7, 110/1 des Coders (Fig. 1) rekonstruiert. Der Decoder (Fig. 2) rekonstruiert mit der gleichen Rekonstruktionseinheit 23/2, wie in dem Coder (Fig. 1) aus dem Codebuchindex, dem quantisierten Normierungsfaktor und dem Modus-Codewort die Strukturkoeffizienten der ersten Stufe 3, 7, 110/1 des Coders (Fig. 1). Aus diesen k-1 Strukturkoeffizienten und dem rekonstruierten Mittelwertkoeffizient wird durch Transformation ein Eingangsvektor des Coders (Fig. 1) rekonstruiert.

Die Elemente des Eingangsvektors werden nach der Peano-Kurve in einem zweidimensionalen Block angeordnet. Durch Anordnen von n derart gebildeter Blöcke entsprechend dem vom Coder verwendeten Raster entsteht das rekonstruierte Bildsignal.

Erfindungsgemäß ist vorteilhafterweise vorgesehen, daß in der zweiten Stufe 4, 5, 6, 8, 9, 10, 110/2 ein konstanter Schwellwert $SW_c$ angewendet wird.

Eine andere Weiterbildung der Erfindung sieht vor, daß die unterabgetasteten Chrominanz-Komponenten des digitalen Bildsignals wie die Mittelwertkoeffizienten der zweiten Stufe 4, 5, 6, 8, 9, 10, 110/2 behandelt werden.

Für bestimmte Anwendungsfälle der vorliegenden Erfindung kann vorteilhafterweise eine Schaltungsanordnung zur Durchführung des Verfahrens vorgesehen werden, bei der zumindest eine dritte Stufe angeordnet ist, die mit der ersten und der zweiten Stufe kaskadenartig zusammengeschaltet ist.

Eine weitere vorteilhafte Weiterbildung der Erfindung sieht eine Schaltungsanordnung zur Durchführung des Verfahrens vor, bei der ein Pufferspeicher 14 am Ausgang des Coders (Fig. 1) angeordnet ist, dessen Füllungsgrad über einen Proportionalregler den Schwellwert $SW_v$ der ersten Stufe 3, 7, 110/1 des Coders regelt. Dieser Pufferspeicher 14 ist dazu bestimmt, bei Aufnahme von Signalen mit variabler Datenrate an seinem Eingang Signale mit konstanter Datenrate an seinem Ausgang auszugeben und über den Übertragungskanal zu dem Decoder (Fig. 2) zu übertragen.

Eine weitere Weiterbildung der Erfindung vermeidet sichtbare Blockgrenzen im rekonstruierten Bildsignal, die durch einen zu großen Schwellwert der ersten Stufe 3, 7, 110/1 des Coders hervorgerufen werden können, durch Rekonstruktion der Bildelemente des betreffenden Blocks mittels zweidimensionaler Tiefpaßinterpolation. Als Stützwerte der Interpolation werden der Mittelwertkoeffizient des Blocks selbst und die Mittelwertkoeffizienten der direkt und indirekt räumlich benachbarten Blöcke verwendet. Wurden die Bildelemente der direkt benachbarten Blöcke aus Struktur-Koeffizienten der ersten Stufe 3, 7, 110/1 des Coders rekonstruiert, so ist anstelle der Mittelwertkoeffizienten der arithemetische Mittelwert der rekonstruierten Bildelemente, die am Rand des zu rekonstruierenen Blocks liegen, als Stützwert zu verwenden.

Die beschriebenen Schaltungsanordnungen für den Coder den Decoder, den INTRA-INTER-FRAME-Vektorquantisierer und die Rekonstruktionseinheit stellen lediglich bevorzugte Ausführungsbeispiele für die Erfindung dar.

**Patentansprüche**

1. Mehrstufiges Verfahren zur Datenreduktion digitaler Bildsignale, bei dem Bilder verschiedener Auflösungsebenen erzeugt werden, mit folgenden Merkmalen:

a) ein Bild ist zu Beginn des Verfahrens vorgegeben und wird als Bild der Auflösungsebene 1 (eins) behandelt;

b) ein Bild der Auflösungsebene s wird in n Blöcke der Auflösungsebene s zu je k Bildpunkten der Auflösungsebene s mit $1 \leqq s \leqq SMAX$ unterteilt, wobei SMAX eine vorgegebene, maximale Stufenzahl ist;

c) jeder Block der Auflösungsebene s wird einer orthogonalen Transformation unterworfen, welche für jeden Block der Auflösungsebene s einen Mittelwertkoeffizienten der Auflösungsebene s und k-1 Strukturkoeffizienten der Auflösungsebene s liefert;

d) die Strukturkoeffizienten der Auflösungsebene s werden einer Vektorquantisierung unterzogen;

e) die Mittelwertkoeffizienten der Auflösungsebene s aller Blöcke der Auflösungsebene s sind ein Bild der Auflösungsebene s + 1 mit n Bildpunkten der Auflösungsebene s + 1, auf welches das Verfahren ebenfalls angewendet wird, falls s kleiner als die maximale Zahl SMAX der Auflösungsebenenen ist;

f) die Mittelwertkoeffizienten der Auflösungsebene SMAX werden skalar quantisiert.

2. Verfahren nach Anspruch 1,
dadurch **gekennzeichnet,**
daß zur Transformation der Blöcke der Auflösungsebene s eine symmetrische, fast-zyklische Hadamard-Matrix verwendet wird.

3. Verfahren nach einem der vorhergehenden Ansprüche,
dadurch **gekennzeichnet,**
daß die Bildpunkte der Auflösungsebene s eines Blockes der Auflösungsebene s mit Hilfe einer Peano-Kurve zu einem k-dimensionalen Vektor angeordnet werden.

4. Verfahren nach einem der vorhergehenden Ansprüche,
dadurch **gekennzeichnet,**
daß die Strukturkoeffizienten der Auflösunngsebene s vor der Vektorquantisierung durch Divison durch ihre Spannweite normiert werden, falls ihre Spannweite eine vorgegebene Schwelle übersteigt.

5. Verfahren nach einem der vorhergehenden Ansprüche,
dadurch **gekennzeichnet,**
daß ein Vektor aus k-1 Strukturkoeffizienten oder normierten Strukturkoeffizienten der Auflösungsebene s bei der Vektorquantisierung durch einen Codebuchvektor dargestellt wird, für den gilt, daß die Spannweite des aus diesen beiden Vektoren gebildeten Differenzvektors minimal ist.

6. Verfahren nach einem der vorhergehenden Ansprüche,
dadurch **gekennzeichnet,**
daß die unterabgetasteten Chrominanz-Komponenten der digitalen Bildsignale wie die Mittelwertkoeffizienten der Auflösungsebene 1 behandelt werden.

**Claims**

1. Multi-step method for data reduction of digital video signals in which images of various resolution levels are generated, comprising the following features:

a) an image is given at the beginning of the method and is treated as image of resolution level 1 (one);

b) an image of resolution level s is subdivided into n blocks of resolution level s of k picture elements each of resolution level s with $1 \leqq s \leqq SMAX$, SMAX being a predetermined maximum number of steps;

c) each block of resolution level s is subjected to an orthogonal transformation which supplies for each block of resolution level s a mean value coefficient of resolution level s and k-1 structure coefficients of resolution level s;

d) the structure coefficients of resolution level s are subjected to a vector quantisation;

e) the mean value coefficients of resolution level s of all blocks of resolution level s are an image of resolution level s + 1 with n picture elements of resolution level s + 1 to which the method is also applied if s is smaller than the maximum number SMAX of resolution levels;

f) the mean value coefficients of resolution level SMAX are scalarly quantised.

2. Method according to Claim 1, characterised in that a symmetrical, nearly cyclical Hadamard matrix is used for the transformation of the blocks of resolution level s.

3. Method according to one of the preceding claims, characterised in that the picture elements of resolution level s of a block of resolution level s are arranged to form a k-dimensional vector with the aid of a Peano curve.

4. Method according to one of the preceding claims, characterised in that, before the vector quantisation, the structure coefficients of resolution level s are normalised by division by their span if their span exceeds a predetermined threshold.

5. Method according to one of the preceding claims, characterised in that in the vector quantisation, a vector of k-1 structure coefficients or normalized structure coefficients of resolution level s is represented by a code book vector for which it holds true that the span of the difference vector formed from these two vectors is minimal.

6. Method according to one of the preceding claims, characterised in that the chrominance components, which are sampled at sub-Nyquist rates, of the digital video signals are treated like the mean value coefficients of resolution level 1.

**Revendications**

1. Procédé à échelons multiples pour réduire les données de signaux d'images numériques, selon lequel on forme des images dans différents plans de résolution, et présentant les caractéristiques suivantes :
   a) une image est prédéterminée au début du procédé et est traitée en tant qu'image appartenant au plan de résolution 1 (un);
   b) une image du plan de résolution s est subdivisée en n blocs du plan de résolution s comportant chacun k points d'image du plan de résolution s avec 1 ≦ s ≦ SMAX, SMAX étant un nombre maximum prédéterminé d'échelons;
   c) chaque bloc du plan de résolution s est soumis à une transformation orthogonale qui fournit, pour chaque bloc du plan de résolution s, un coefficient moyen du plan de résolution s et k-1 coefficients de structure du plan de résolution s;
   d) les coefficients de structure du plan de résolution s sont soumis à une quantification vectorielle;
   e) les coefficients moyens du plan de résolution s de tous les blocs de ce plan de résolution forment une image du plan de résolution s+1, comportant n points d'image du point de résolution s+1, à laquelle le procédé est également appliqué, dans le cas où s est inférieur au nombre maximum SMAX des plans de résolution;
   f) les coefficients moyens du plan de résolution SMAX sont quantifiés sous une forme scalaire.

2. Procédé suivant la revendication 1, caractérisé par le fait que pour la transformation des blocs du plan de résolution s, on utilise une matrice de Hadamard symétrique, presque cyclique.

3. Procédé suivant l'une des revendications précédentes, caractérisé par le fait que les points d'image du plan de résolution s d'un bloc de ce plan de résolution sont disposés à l'aide d'une courbe de Péano sous la forme d'un vecteur à k dimensions.

4. Procédé suivant l'une des revendications précédentes, caractérisé par le fait que les coefficients de structure du plan de résolution s sont normalisés, avant la quantification vectorielle, par division par leur valeur maximale, dans le cas où leur valeur maximale dépasse un seuil prédéterminé.

5. Procédé suivant l'une des revendications précédentes, caractérisé par le fait qu'un vecteur formé de k-1 coefficients de structure ou coefficients de structure normalisé du plan de résolution s est représenté, lors de la quantification vectorielle, par un vecteur de livre de codes, pour lequel la valeur maximale du vecteur différence formée par ces deux vecteurs est minimale.

6. Procédé suivant l'une des revendications précédentes, caractérisé par le fait que les composantes de chrominance, non échantillonnées avec subdivision, des signaux d'images numériques sont traitées de la même manière que les coefficients moyens du plan de résolution 1.

FIG 1

FIG 2

## FIG 3

INTRA/INTER-FRAME-VEKTORQUANTISIERER

## FIG 4

REKONSTRUKTIONSEINHEIT

EP 0 241 745 B1